(19) Europäisches Patentamt / European Patent Office / Office européen des brevets

(11) **EP 2 859 652 B1**

(12) # EUROPÄISCHE PATENTSCHRIFT

(45) Veröffentlichungstag und Bekanntmachung des Hinweises auf die Patenterteilung:
**06.09.2017 Patentblatt 2017/36**

(21) Anmeldenummer: **13745786.7**

(22) Anmeldetag: **12.06.2013**

(51) Int Cl.:
*H02M 1/42* (2007.01)    *H05B 41/28* (2006.01)
*H05B 33/08* (2006.01)

(86) Internationale Anmeldenummer:
**PCT/AT2013/000100**

(87) Internationale Veröffentlichungsnummer:
**WO 2013/185157 (19.12.2013 Gazette 2013/51)**

(54) **LEISTUNGSFAKTORKORREKTURSCHALTUNG, BETRIEBSGERÄT FÜR EIN LEUCHTMITTEL UND VERFAHREN ZUM STEUERN EINER LEISTUNGSFAKTORKORREKTURSCHALTUNG**

POWER FACTOR CORRECTION CIRCUIT, CONTROL UNIT FOR AN ILLUMINANT AND METHOD FOR CONTROLLING A POWER FACTOR CORRECTION CIRCUIT

CIRCUIT DE CORRECTION DU FACTEUR DE PUISSANCE, APPAREIL POUR FAIRE FONCTIONNER UN ÉLÉMENT LUMINESCENT ET PROCÉDÉ POUR COMMANDER UN CIRCUIT DE CORRECTION DU FACTEUR DE PUISSANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.06.2012 DE 102012011755**

(43) Veröffentlichungstag der Anmeldung:
**15.04.2015 Patentblatt 2015/16**

(73) Patentinhaber: **Tridonic GmbH & Co. KG**
**6851 Dornbirn (AT)**

(72) Erfinder:
• **LOCHMANN, Frank**
**88147 Esseratsweiler (DE)**
• **LAMPERT, Peter**
**A-6800 Feldkirch (AT)**
• **AUER, Hans**
**A-6850 Dornbirn (AT)**

(74) Vertreter: **Banzer, Hans-Jörg**
**Kraus & Weisert**
**Patentanwälte PartGmbB**
**Thomas-Wimmer-Ring 15**
**80539 München (DE)**

(56) Entgegenhaltungen:
**EP-A1- 1 363 385**    **EP-A2- 1 526 622**
**US-A1- 2010 308 740**

**Beschreibung**

Die Erfindung betrifft eine Schaltung zur Leistungsfaktorkorrektur und ein Verfahren zum Steuern einer solchen Schaltung. Insbesondere betrifft die Erfindung das technische Gebiet der Leistungsfaktorkorrektur für den Einsatz bei Betriebsgeräten für Leuchtmittel.

Eine Leistungsfaktorkorrektur ("Power Factor Correction", PFC) wird eingesetzt, um Oberwellenströme in einem Eingangsstrom zu beseitigen bzw. zumindest zu verringern. Oberwellenströme können insbesondere bei nicht-linearen Verbrauchern, wie es beispielsweise Gleichrichter mit nachfolgender Glättung in Netzteilen sind, auftreten, da bei derartigen Verbrauchern der Eingangsstrom trotz der sinusförmigen Eingangsspannung in seiner Phase verschoben und nicht-sinusförmig verzerrt wird. Den dabei auftretenden höherfrequenten Oberschwingungen kann durch eine dem jeweiligen Gerät vorgeschaltete aktive oder getaktete Leistungsfaktorkorrektur-Schaltung entgegengewirkt werden.

Leistungsfaktorkorrekturschaltungen werden auch bei Betriebsgeräten für Leuchtmittel eingesetzt, beispielsweise bei elektronischen Vorschaltgeräten oder LED-Konvertern. Die Verwendung derartiger Schaltungen bei Geräten zum Betreiben von Leuchtmitteln ist wünschenswert oder erforderlich, da Normen die zulässige Rücksendung von Oberwellen in das Versorgungsnetz beschränken.

Für Leistungsfaktorkorrekturschaltungen wird häufig eine Schaltungstopologie verwendet, die auf der Topologie eines Aufwärtswandlers beruht. Dabei wird eine mit einer gleichgerichteten Wechselspannung versorgte Induktivität oder Spule durch Einschalten und Ausschalten eines steuerbaren Schalters mit Energie geladen bzw. entladen. Der Entladestrom der Induktivität fließt über eine Diode zu einer Ausgangskapazität, so dass am Ausgang eine gegenüber der Eingangsspannung erhöhte Gleichspannung abgegriffen werden kann. Ebenso sind jedoch auch andere Konverterarten in Leistungsfaktorkorrektur-Schaltungen üblich, wie beispielsweise Flyback-Konverter oder Buck-Konverter.

Leistungsfaktorkorrekturschaltungen können eine Steuereinrichtung aufweisen, die die Stromaufnahme kontrolliert. Dazu kann beispielsweise die $T_{on}$-Zeit, für die der Schalter jeweils in den Ein-Zustand geschaltet wird, um Energie in der Spule zu speichern, eingestellt werden.

Durch unerwünschte Kapazitäten im Eingangsbereich kann es dazu kommen, dass eine oder mehrere der harmonischen Oberschwingungen nicht in dem gewünschten Umfang unterdrückt werden. Dies kann zu einem Strompeak in der Stromaufnahme der Leistungsfaktorkorrekturschaltungen bei einem Wiederanstieg der Eingangsspannung führen.

Die EP 1 363 385 A1, die als Basis für den Oberbegriff der unabhängigen Ansprüche dient, offenbart eine Leistungsfaktorkorrekturschaltung, bei der eine Zeitableitung einer Spannung an einem Anschluss einer Induktivität gebildet wird, um Nulldurchgänge des Stroms in der Induktivität zu erkennen.

Die EP 1 526 622 A1 offenbart ein elektronisches Vorschaltgerät, das eine Schaltung zum Erfassen einer Zeitableitung einer Spannung der Leistungsversorgung aufweist.

Der Erfindung liegt die Aufgabe zugrunde, ein Verfahren und eine Schaltung zur Leistungsfaktorkorrektur bereitzustellen, die eine besonders wirksame Unterdrückung von Oberschwingungen erlauben. Insbesondere besteht ein Bedarf an derartigen Vorrichtungen und Verfahren, bei denen ein unerwünschter Strompeak bei einem Wiederanstieg der Eingangsspannung reduziert werden kann, ohne dass dazu Änderungen beispielsweise an den Kapazitäten im Eingangsbereich erforderlich sind.

Die Aufgabe wird durch eine Leistungsfaktorkorrekturschaltung, ein Betriebsgerät und ein Verfahren mit den in den unabhängigen Ansprüchen angegebenen Merkmalen gelöst. Die abhängigen Ansprüche definieren vorteilhafte und bevorzugte Ausführungsformen der Erfindung.

Bei einer Leistungsfaktorkorrekturschaltung nach Ausführungsbeispielen wird ein Schaltmittel abhängig von einem Vorzeichen einer Zeitableitung einer Eingangsspannung der Leistungsfaktorkorrekturschaltung geschaltet. Insbesondere kann eine Zeitdauer, für die das Schaltmittel in den Ein-Zustand geschaltet wird und die auch als $T_{on}$-Zeit bezeichnet wird, abhängig von dem Vorzeichen der Zeitableitung der Eingangsspannung eingestellt werden. Die $T_{on}$-Zeit kann bestimmt werden, indem ein Zusatzintervall, um das die $T_{on}$-Zeit gegenüber einem von einem Regler bestimmten Wert verlängert wird, abhängig von dem Vorzeichen der Zeitableitung der Eingangsspannung bestimmt wird.

Um eine Steuerung des Schaltmittels abhängig von dem Vorzeichen der Zeitableitung der Eingangsspannung zu realisieren, kann das Vorzeichen der Zeitableitung der Eingangsspannung rechnerisch bestimmt werden. Das Vorzeichen der Zeitableitung der Eingangsspannung kann abhängig von einer Ausgangskreisgröße der Leistungsfaktorkorrekturschaltung rechnerisch bestimmt werden. Eine Steuereinrichtung für das Schaltmittel kann einen Regler aufweise, der abhängig von der Ausgangskreisgröße einen Wert für die $T_{on}$-Zeit, der dann noch um das Zusatzintervall verlängert wird, bestimmt. Basierend darauf, ob ein Quotienten aus dem vom Regler bestimmten Wert für die $T_{on}$-Zeit und der $T_{off}$-Zeit als Funktion der Zeit zu- oder abnimmt, kann auch das Vorzeichen der Zeitableitung der Eingangsspannung rechnerisch bestimmt werden.

Bei weiteren Ausgestaltungen kann eine Steuereinrichtung die Eingangsspannung erfassen und/oder der Steuereinrichtung kann ein Signal zugeführt werden, aus dem das Vorzeichen der Zeitableitung der Eingangsspannung bestimmbar ist.

Zu Verringerung der Amplitude eines Strompeaks in dem von der Leistungsfaktorkorrekturschaltung aufgenommenen Eingangsstrom, der beispielsweise durch eine harmonische Oberschwingung hervorgerufen werden kann, kann die $T_{on}$-Zeit gegenüber einem von einem Regler bestimmten Wert um ein erstes Zusatzintervall verlängert werden, wenn das Vorzeichen der Zeitableitung der Eingangsspannung positiv ist, und um ein zweites Zusatzintervall verlängert werden, wenn das Vorzeichen der Zeitableitung der Eingangsspannung negativ ist. Das erste Zusatzintervall und das zweite Zusatzintervall können jeweils von dem Wert der Eingangsspannung abhängig sein. Bei demselben Wert der Eingangsspannung kann das erste Zusatzintervall größer sein als das zweite Zusatzintervall. D.h. für denselben Wert der Eingangsspannung kann die $T_{on}$-Zeit bei steigender Eingangsspannung um ein Zusatzintervall verlängert werden, das größer ist als das entsprechende Zusatzintervall bei abnehmender Eingangsspannung für denselben Wert der Eingangsspannung.

Während eine vom Vorzeichen der Zeitableitung der Eingangsspannung abhängige Korrektur der $T_{on}$-Zeit verwendet werden kann, um die Stromaufnahme der Leistungsfaktorkorrekturschaltung so zu beeinflussen, dass die Amplitude von unerwünschten Strompeaks bei einem Wiederanstieg der Eingangsspannung verringert wird, können auch andere Parameter beeinflusst werden, um die Stromaufnahme entsprechend anzupassen.

Entsprechend weist eine Leistungsfaktorkorrekturschaltung nach einem Ausführungsbeispiel einen Eingang zum Empfangen einer Eingangsspannung, eine mit dem Eingang gekoppelte Induktivität und ein mit der Induktivität gekoppeltes Schaltmittel auf. Das Schaltmittel ist steuerbar, um die Induktivität wahlweise zu laden und zu entladen, d. h. um Energie in der Induktivität zu speichern und um die Energie beispielsweise zu einem Ausgangskondensator zu übertragen. Die Leistungsfaktorkorrekturschaltung weist eine Steuereinrichtung auf, die eingerichtet ist, um Steuersignale zum Steuern des Schaltmittels abhängig von einem Parameterwert zu erzeugen. Die Steuereinrichtung ist eingerichtet, um den Parameterwert abhängig von einem Vorzeichen einer Zeitableitung der Eingangsspannung zu ermitteln.

Der Parameterwert kann beispielsweise die Dauer eines Zusatzintervalls sein, um das die $T_{on}$-Zeit des Schaltmittels verlängert wird.

Die Steuereinrichtung kann eingerichtet sein, um den Parameterwert abhängig von einem aktuellen Wert der Eingangsspannung und abhängig von dem Vorzeichen der Zeitableitung zu ermitteln. Dadurch können Amplituden von Strompeaks beim Wideranstieg der Eingangsspannung besonders wirksam reduziert werden.

Die Steuereinrichtung kann eingerichtet sein, um bei demselben aktuellen Wert der Eingangsspannung einen ersten Parameterwert zu ermitteln, wenn die Zeitableitung ein positives Vorzeichen aufweist, und einen davon verschiedenen zweiten Parameterwert zu ermitteln, wenn die Zeitableitung ein negatives Vorzeichen aufweist. Die Steuereinrichtung kann derart eingerichtet sein, dass der erste Parameterwert kleiner als der zweite Parameterwert ist.

Die Steuereinrichtung kann eingerichtet sein, um den Parameterwert basierend auf einer ersten Tabelle zu ermitteln, wenn die Zeitableitung ein erstes Vorzeichen aufweist, und um den Parameterwert basierend auf einer davon verschiedenen zweiten Tabelle zu ermitteln, wenn die Zeitableitung ein zu dem ersten Vorzeichen entgegengesetztes zweites Vorzeichen aufweist.

Die Steuereinrichtung kann eingerichtet sein, um das Schaltmittel für eine $T_{on}$-Zeit in einen Ein-Zustand zu schalten. Die $T_{on}$-Zeit kann abhängig von dem Parameterwert ermittelt werden.

Die Steuereinrichtung kann eingerichtet sein, um die $T_{on}$-Zeit um ein von der Eingangsspannung abhängiges Zusatzintervall zu verlängern, wobei der Parameterwert eine Dauer des Zusatzintervalls definiert.

Die Steuereinrichtung kann eingerichtet sein, um das Vorzeichen der Zeitableitung rechnerisch zu bestimmen. Die Steuereinrichtung kann eingerichtet sein, um das Vorzeichen der Zeitableitung basierend auf einem Quotienten aus der $T_{on}$-Zeit und einer $T_{off}$-Zeit, für die das Schaltmittel jeweils in einen Aus-Zustand geschalten ist, rechnerisch zu bestimmen. Die Steuereinrichtung kann eingerichtet sein, um das Vorzeichen der Zeitableitung basierend darauf zu bestimmen, ob der Quotienten aus der der $T_{off}$-Zeit und der $T_{on}$-Zeit als Funktion der Zeit zunimmt oder abnimmt.

Die Steuereinrichtung kann eingerichtet sein, um den Parameterwert weiterhin abhängig von einer Ausgangsspannung der Leistungsfaktorkorrekturschaltung rechnerisch zu ermitteln.

Die Steuereinrichtung kann als integrierte Halbleiterschaltung ausgestaltet sein. Die Steuereinrichtung kann insbesondere als anwendungsspezifische Spezialschaltung (ASIC - "application specific integrated circuit") ausgestaltet sein.

Nach einem weiteren Ausführungsbeispiel wird eine Steuereinrichtung zum Steuern einer Leistungsfaktorkorrekturschaltung angegeben. Die Steuereinrichtung ist eingerichtet, um Steuersignale zum Steuern eines Schaltmittels der Leistungsfaktorkorrekturschaltung abhängig von einem Parameterwert zu erzeugen. Die Steuereinrichtung ist eingerichtet, um den Parameterwert abhängig von einem Vorzeichen einer Zeitableitung einer Eingangsspannung der Leistungsfaktorkorrekturschaltung zu ermitteln.

Die Steuereinrichtung kann eingerichtet sein, um abhängig von dem Vorzeichen der Zeitableitung der Eingangsspannung eine von mehreren Tabellen auszuwählen und den Parameterwert durch eine Tabellenabfrage der ausgewählten Tabelle zu ermitteln.

Die Steuereinrichtung kann zur Verwendung bei einer Leistungsfaktorkorrekturschaltung nach einem Ausführungsbeispiel eingerichtet sein.

Nach einem weiteren Ausführungsbeispiel wird ein Betriebsgerät für ein Leuchtmittel angegeben, das eine Leistungsfaktorkorrekturschaltung nach einem Ausführungsbeispiel umfasst. Das Betriebsgerät kann als LED-Konverter oder als elektronisches Vorschaltgerät ausgestaltet sein. Das Betriebsgerät kann einen Resonanzwandler umfassen, der von der Leistungsfaktorkorrekturschaltung mit Energie versorgt wird.

Nach einem weiteren Ausführungsbeispiel wird ein Beleuchtungssystem angegeben, das das Betriebsgerät und ein damit gekoppeltes Leuchtmittel umfasst. Das Leuchtmittel kann eine oder mehrere Gasentladungslampen, Leuchtstofflampen oder ein anderes Fluoreszenzleuchtmittel umfassen. Das Leuchtmittel kann eine oder mehrere Leuchtdioden (LEDs) umfassen. Das Leuchtmittel kann separat von dem Betriebsgerät ausgeführt sein. Das Beleuchtungssystem kann weiterhin eine zentrale Steuerung umfassen, die eingerichtet ist, um Dimmbefehle an das Betriebsgerät zu übermitteln oder vom Betriebsgerät übertragene Signale auszuwerten.

Nach einem weiteren Ausführungsbeispiel wird ein Verfahren zum Steuern einer Leistungsfaktorkorrekturschaltung angeben, wobei die Leistungsfaktorkorrekturschaltung einen Eingang zum Empfangen einer Eingangsspannung, eine mit dem Eingang gekoppelte Induktivität und ein mit der Induktivität gekoppeltes Schaltmittel, das steuerbar ist, um die Induktivität wahlweise zu laden und zu entladen, umfasst. Bei dem Verfahren werden Steuersignale zum Schalten des Schaltmittels abhängig von einem Parameterwert erzeugt. Der Parameterwert wird abhängig von einem Vorzeichen einer Zeitableitung der Eingangsspannung ermittelt.

Weiterbildungen des Verfahrens und die damit jeweils erzielten Wirkungen entsprechen den Weiterbildungen der Leistungsfaktorkorrekturschaltung nach Ausführungsbeispielen.

Der Parameterwert kann abhängig von sowohl dem Vorzeichen der Zeitableitung als auch einem aktuellen Wert der Eingangsspannung ermittelt werden.

Der Parameterwert kann durch Abfrage einer ersten Tabelle ermittelt werden, wenn die Zeitableitung ein erstes Vorzeichen aufweist, und kann durch Abfrage einer davon verschiedenen zweiten Tabelle ermittelt werden, wenn die Zeitableitung ein zu dem ersten Vorzeichen entgegengesetztes zweites Vorzeichen aufweist.

Eine $T_{on}$-Zeit, für die das Schaltmittel jeweils in einen Ein-Zustand geschaltet wird, kann von dem Parameterwert abhängen. Der Parameterwert kann die Dauer eines Zusatzintervalls angeben, um das die $T_{on}$-Zeit gegenüber einem von einem Regler ermittelten Wert verlängert wird.

Das Verfahren kann mit einer Leistungsfaktorkorrekturschaltung nach einem Ausführungsbeispiel durchgeführt werden, wobei die Steuereinrichtung die Ermittlung des Parameterwerts und die Erzeugung des Steuersignals zum Ansteuern des Schaltmittels vornimmt.

Bei Vorrichtungen und Verfahren nach Ausführungsbeispielen kann durch Berücksichtigung des Vorzeichens der Zeitableitung der Eingangsspannung bei der Steuerung des Schaltmittels ein Strompeak beispielsweise beim Wiederanstieg der Eingangsspannung wirksam reduziert werden. Eine spezifische Anpassung anderer Komponenten der Leistungsfaktorkorrekturschaltung, beispielsweise eines Hochfrequenz-Rückschlusskondensators, ist dazu nicht erforderlich.

Die Erfindung wird nachfolgend unter Bezugnahme auf die Zeichnungen anhand bevorzugter Ausführungsformen erläutert.

FIG. 1 zeigt ein Beleuchtungssystem mit einer Leistungsfaktorkorrekturschaltung nach einem Ausführungsbeispiel.

FIG. 2 zeigt ein Schaltbild einer Leistungsfaktorkorrekturschaltung nach einem Ausführungsbeispiel.

FIG. 3 ist eine schematische Darstellung eines von einer Steuereinrichtung der Leistungsfaktorkorrekturschaltung nach einem Ausführungsbeispiel ausgegebenen Steuersignals zur Erläuterung der Wirkungsweise der Leistungsfaktorkorrekturschaltung.

FIG. 4 ist ein Flussdiagramm eines Verfahrens nach einem Ausführungsbeispiel.

FIG. 5 zeigt einen Parameterwert zum Steuern des Schaltmittels, der abhängig vom Vorzeichen einer Zeitableitung einer Eingangsspannung ermittelt wird, und den entsprechenden Eingangsstrom bei einer Leistungsfaktorkorrekturschaltung nach einem Ausführungsbeispiel.

FIG. 6 zeigt zum Vergleich den Eingangsstrom bei einer Leistungsfaktorkorrekturschaltung, bei der der Parameterwert unabhängig vom Vorzeichen der Zeitableitung der Eingangsspannung ermittelt wird.

FIG. 7 ist ein Flussdiagramm eines Verfahrens, das von der Steuereinrichtung einer Leistungsfaktorkorrekturschaltung nach einem Ausführungsbeispiel ausgeführt wird.

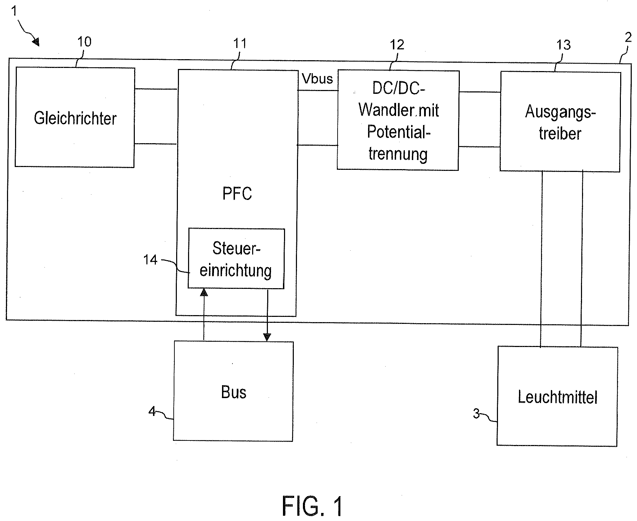

FIG. 1 zeigt eine Blockdiagrammdarstellung eines Beleuchtungssystems 1, das ein Betriebsgerät 2 für ein Leuchtmittel 3 umfasst. Das Leuchtmittel 3 kann beispielsweise eine Gasentladungslampe, Leuchtstofflampe oder ein anderes Fluoreszenzleuchtmittel oder LEDs umfassen. Das Betriebsgerät 2 kann mit einem Bus 4 oder einem Drahtloskommunikationssystem verbunden sein, um Dimmbefehle zu empfangen und/oder Statusmeldungen auszugeben.

Das Betriebsgerät 2 kann beispielsweise als elektronisches Vorschaltgerät (EVG) für eine Gasentladungslampe, Leuchtstofflampe oder ein anderes Fluoreszenzleuchtmittel oder als LED-Konverter ausgestaltet sein. Das Betriebsgerät 2 weist einen Gleichrichter 10 zum Gleichrichten einer Versorgungsspannung, beispielsweise der Netzspannung, auf. Das Betriebsgerät 2 weist eine Leistungsfaktorkorrekturschaltung 11 auf. Die Leistungsfaktorkorrekturschaltung 11 stellt eine Ausgangsspannung für nachgeschaltete Komponenten des Betriebsgeräts 2 bereit, die auch als Busspannung Vbus bezeichnet wird. Eine weitere Spannungsumsetzung und/oder Dimmfunktionen können beispielsweise über einen DC/DC-Wandler 12, der als LLC-Resonanzwandler ausgestaltet sein kann, und/oder einen Ausgangstreiber 13 erreicht werden. Eine Steuereinrichtung 14 kann verschiedene Steuer- oder Regelfunktionen erfüllen.

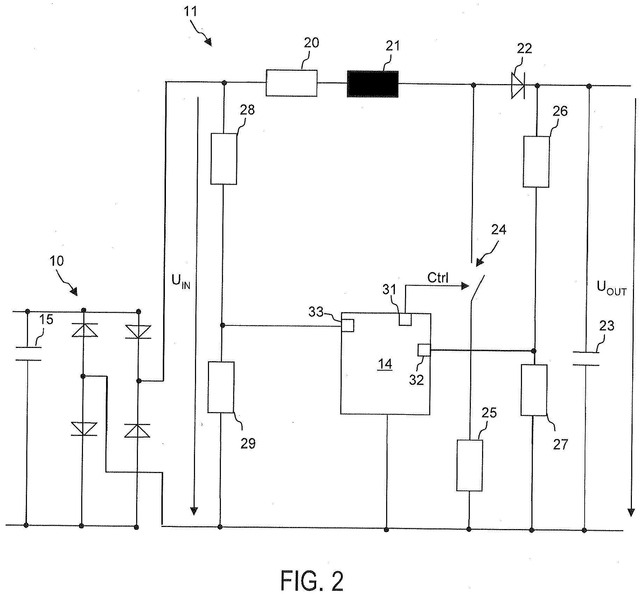

Die Funktionsweise der Leistungsfaktorkorrekturschaltung 11 nach Ausführungsbeispielen wird unter Bezugnahme auf FIG. 2-7 ausführlicher beschrieben. Während in FIG. 1 schematisch ein Betriebsgerät dargestellt ist, bei dem die Leistungsfaktorkorrekturschaltung 11 eine Busspannung an andere Komponenten des Betriebsgeräts 2 bereitstellt, kann die Leistungsfaktorkorrekturschaltung nach Ausführungsbeispielen auch als isolierte Leistungsfaktorkorrekturschaltung mit nachgeschalteter Treiberstufe verwendet werden.

FIG. 2 ist ein Schaltbild der Leistungsfaktorkorrekturschaltung 11 nach einem Ausführungsbeispiel. Eine Versorgungs-Wechselspannung, beispielsweise die Netzspannung, wird mit einem Kondensator 15 geglättet und von dem Gleichrichter 10 in eine gleichgerichtete Wechselspannung umgesetzt, die als Eingangsspannung $U_{IN}$ am Eingang der Leistungsfaktorkorrekturschaltung 11 anliegt.

Die Eingangsspannung $U_{IN}$ wird einer Induktivität 21 der Leistungsfaktorkorrekturschaltung zugeführt, die eine Spule umfassen kann. Ein Widerstand 20 am Eingang der Leistungsfaktorkorrekturschaltung ist ebenfalls schematisch dargestellt. Die Induktivität 21 ist mit einer Diode 22 zwischen dem Eingangsanschluss und einem Ausgangsanschluss der Leistungsfaktorkorrekturschaltung 11 in Serie geschaltet. An dem mit einem Ausgangskondensator 23 gekoppelten Ausgangsanschluss wird eine Ausgangs-Gleichspannung $U_{OUT}$ bereitgestellt. Die Ausgangs-Gleichspannung $U_{OUT}$ dient zur Versorgung einer Last, welcher die Leistungsfaktorkorrekturschaltung 11 vorgeschaltet ist. Bei der Last kann es sich beispielsweise um einen Gleichspannungs-Gleichspannungswandler mit damit verbundenem Leuchtmittel handeln.

An die Verbindung zwischen der Induktivität 21 und der Diode 22 ist ein steuerbarer Schalter 24 angeschlossen, der als steuerbares Schaltmittel dient. Der steuerbare Schalter 24 kann über einen Shunt-Widerstand 25 mit Masse verbunden sein. Der Schalter 24 ist ein steuerbarer elektronischer Schalter, der ein Leistungsschalter sein kann und der beispielsweise als Feldeffekttransistor (FET), insbesondere als MOSFET, ausgebildet sein kann. Der Schalter 24 wird von der Steuereinrichtung 14 der Leistungsfaktorkorrekturschaltung 11 in den Ein-Zustand und den Aus-Zustand geschaltet. Die Steuereinrichtung 14 weist einen entsprechenden Ausgang 31 zum Aussteuern eines Steuersignals auf, mit dem beispielsweise die Gatespannung des Schalters 24 kontrolliert werden kann.

Im eingeschalteten Zustand des Schalters 24 ist die Induktivität 21 über den Schalter 24 mit Masse verbunden, wobei die Diode 22 sperrt, so dass die Induktivität 21 aufgeladen und Energie in der Induktivität 21 gespeichert wird. Ist hingegen der Schalter 24 ausgeschaltet, d.h. offen, ist die Diode 22 leitend, so dass sich die Induktivität 21 über die Diode 22 in den Ausgangskondensator 23 entladen kann und die in der Induktivität 21 gespeicherte Energie in den Ausgangskondensator 23 übertragen wird.

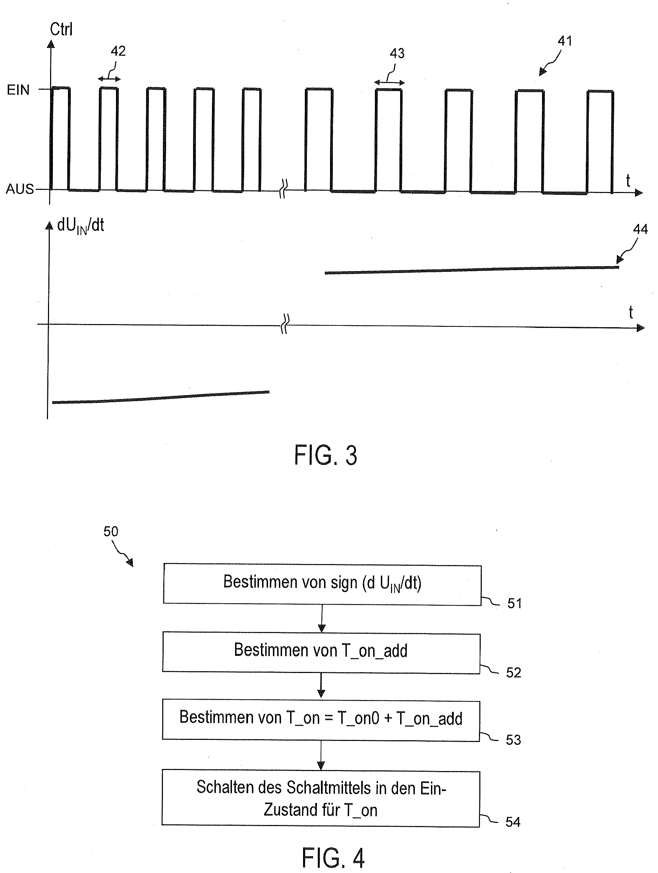

Der Schalter 24 wird von der Steuereinrichtung 14 angesteuert, die in Form einer integrierten Schaltung, insbesondere als anwendungsspezifische Spezialschaltung (ASIC), ausgestaltet sein kann. Die Leistungsfaktorkorrektur wird durch wiederholtes Ein- und Ausschalten des Schalters 24 erzielt, wobei die Schaltfrequenz für den Schalter 24 viel größer als die Frequenz der gleichgerichteten Eingangs-Wechselspannung $U_{IN}$ ist. Die Leistungsfaktorkorrekturschaltung 11 kann als Boost-Konverter arbeiten. Die Funktionsweise der Steuereinrichtung 14 wird unter Bezugnahme auf FIG. 3-7 noch ausführlich beschrieben.

Die Steuereinrichtung 14 ist allgemein so ausgestaltet, dass sie ein Steuersignal Ctrl zum Ansteuern des Schalters 24 abhängig von einem Parameterwert erzeugt. Die Steuereinrichtung 14 ist eingerichtet, um den Parameterwert abhängig von einem Vorzeichen einer Zeitableitung der Eingangsspannung $U_{IN}$ zu ermitteln und dann das Steuersignal gemäß dem ermittelten Parameterwert zu erzeugen. Der Parameterwert kann beispielsweise eine auch als $T_{on}$-Zeit bezeichnete Zeitdauer, für die der Schalter 24 jeweils in den Ein-Zustand geschaltet wird, um Energie in der Induktivität 21 zu speichern, sein oder kann diese Zeitdauer beeinflussen. Beispielsweise kann, wie noch ausführlicher beschrieben wird, ein von einem Regler bestimmter Wert $T_{on,0}$ für die $T_{on}$-Zeit um ein Zusatzintervall verlängert werden, dessen Dauer sowohl vom aktuellen Wert der Eingangsspannung $U_{IN}$ als auch vom Vorzeichen ihrer Zeitableitung abhängt. Dadurch kann eine Verlängerung der $T_{on}$-Zeit, die einen Korrekturterm für die $T_{on}$-Zeit definiert und zur weiteren Verringerung von Oberschwingungen dient, für dieselbe Eingangsspannung $U_{IN}$ abhängig davon unterschiedlich erfolgen, ob die Eingangsspannung $U_{IN}$ zunimmt oder abfällt.

Verschiedene Ausgestaltungen sind möglich, mit denen die Steuereinrichtung 14 das Vorzeichen der Zeitableitung der Eingangsspannung $U_{IN}$ bestimmen kann. Die Steuereinrichtung 14 kann einen Eingang 32 aufweisen, an dem über einen Spannungsteiler mit Widerständen 26, 27 die Ausgangsspannung erfasst wird. Die Steuereinrichtung 14 kann einen Regler umfassen, der abhängig von der Ausgangsspannung oder einer anderen Ausgangskreisgröße Werte für die $T_{on}$-Zeit bestimmt. Optional kann der Regler auch die als $T_{off}$-Zeit bezeichnete Zeitdauer, für die der Schalter 24 in den Aus-Zustand geschaltet wird, bestimmen. Die Steuereinrichtung 14 kann eine Logik umfassen, um abhängig von einem Quotienten aus der $T_{on}$-Zeit und $T_{off}$-Zeit zu ermitteln, ob die Eingangsspannung gerade ansteigt oder abfällt. Die vom Regler bestimmte $T_{on}$-Zeit kann anschließend noch um ein Zusatzintervall verlängert werden, dessen Dauer von dem Vorzeichen der Zeitableitung der Eingangsspannung $U_{IN}$ abhängt.

Alternativ oder zusätzlich kann die Steuereinrichtung 14 einen weiteren Eingang 33 aufweisen, an dem über einen Spannungsteiler mit Widerständen 28, 29 die Eingangsspannung $U_{IN}$ erfasst wird. Die Steuereinrichtung 14 kann aus dem am weiteren Eingang 33 empfangenen Signal bestimmen, ob die Eingangsspannung $U_{IN}$ gerade zunimmt oder abimmt.

Bei noch einer weiteren Ausgestaltung kann eine von der Steuereinrichtung 14 separate Schaltung verwendet werden, deren Ausgangssignal das Vorzeichen der Zeitableitung der Eingangsspannung $U_{IN}$ abhängt. Dieses das Vorzeichen der Zeitableitung der Eingangsspannung $U_{IN}$ anzeigende Signal kann der Steuereinrichtung 14 zugeführt werden.

Die Steuereinrichtung 14 kann die Eingangsspannung $U_{IN}$ oder auch deren Zeitableitung beispielsweise auch mit Hilfe einer Sekundärwicklung an der Induktivität 21 erfassen.

FIG. 3 veranschaulicht die Funktionsweise der Steuereinrichtung 14. FIG. 3 zeigt ein von der Steuereinrichtung 14 ausgesteuertes Steuersignal 41 und die Zeitableitung 44 der Eingangsspannung. Die Steuereinrichtung 14 bewirkt, dass der Schalter 14 jeweils für eine von der Steuereinrichtung 14 bestimmte $T_{on}$-Zeit in den Ein-Zustand geschaltet wird. Das entsprechende Steuersignal 41 zum getakteten Schalten des Schalters 14 wird von der Steuereinrichtung 14 abhängig von einem Parameterwert erzeugt. Der Parameterwert kann beispielsweise die Zeitdauer eines Zusatzintervalls sein, um das die $T_{on}$-Zeit jeweils verlängert wird. Diese Zeitdauer des Zusatzintervalls kann die Steuereinrichtung 14 abhängig von sowohl dem aktuellen Wert der Eingangsspannung $U_{IN}$ als auch dem Vorzeichen der Zeitableitung $dU_{IN}/dt$ bestimmen. Entsprechend können selbst für denselben aktuellen Wert der Eingangsspannung $U_{IN}$ unterschiedliche $T_{on}$-Zeiten 42 und 43 resultieren, wenn das Vorzeichen der Zeitableitung $dU_{IN}/dt$ unterschiedlich ist.

Die Steuereinrichtung 14 nimmt somit eine Ansteuerung des Schalters 24 abhängig von dem Vorzeichen der Zeitableitung der Eingangsspannung, $dU_{IN}/dt$, vor. Insbesondere kann die Dauer der $T_{on}$-Zeit sowohl vom aktuellen Wert der Eingangsspannung als auch davon abhängen, ob die Eingangsspannung gerade zunimmt oder abnimmt.

Die Steuereinrichtung 14 kann so ausgestaltet sein, dass sie abhängig davon, ob das Vorzeichen der Zeitableitung der Eingangsspannung, $dU_{IN}/dt$, positiv oder negativ ist, die Ansteuerung des Schalters 24 auf unterschiedliche Weise vornimmt. Beispielsweise kann die Bestimmung der $T_{on}$-Zeit, für die der Schalter 24 in den Ein-Zustand geschaltet werden soll, eine Tabellenabfrage umfassen. Abhängig vom Vorzeichen der Zeitableitung der Eingangsspannung, $dU_{IN}/dt$, können unterschiedliche Tabellen für die Tabellenabfrage verwendet werden.

FIG. 4 ist ein Flussdiagramm eines Verfahrens 50 nach einem Ausführungsbeispiel. Das Verfahren 50 kann von der Steuereinrichtung 14 durchgeführt werden.

Bei Schritt 51 wird ein Vorzeichen der Zeitableitung der Eingangsspannung der Leistungsfaktorkorrekturschaltung bestimmt. Das Vorzeichen der Zeitableitung der Eingangsspannung kann rechnerisch bestimmt werden. Das Vorzeichen der Zeitableitung der Eingangsspannung kann abhängig davon bestimmt werden, ob der Quotient aus $T_{on}$-Zeit und $T_{off}$-Zeit zunimmt oder abnimmt.

Bei Schritt 52 wird eine Zeitdauer $T_{on,add}$ eines Zusatzintervalls bestimmt, um das die $T_{on}$-Zeit verlängert werden soll. Diese Zeitdauer kann durch eine Tabellenabfrage ermittelt werden. Abhängig davon, ob das Vorzeichen der Zeitableitung der Eingangsspannung positiv oder negativ ist, können unterschiedliche Tabellen abgefragt werden. Beispielsweise kann die Zeitdauer des Zusatzintervalls basierend auf einer ersten Tabelle ermittelt werden, wenn das Vorzeichen der Zeitableitung positiv ist, und basierend auf einer zweiten Tabelle, wenn das Vorzeichen der Zeitableitung negativ ist. Sowohl die erste Tabelle als auch die zweite Tabelle kann die Zeitdauer des Zusatzintervalls, um das die $T_{on}$-Zeit verlängert werden soll, jeweils abhängig vom Wert der Eingangsspannung angeben. Die erste und zweite Tabelle können dabei so ausgestaltet sein, dass die Zeitdauer $T_{on,add}$ des Zusatzintervalls, um das die $T_{on}$-Zeit verlängert wird, bei einem gegebenen Wert der Eingangsspannung $U_{IN}$ größer ist, wenn die Eingangsspannung zunimmt als wenn die Eingangsspannung abnimmt.

Bei Schritt 53 kann die $T_{on}$-Zeit abhängig von der bei Schritt 52 ermittelten Zeitdauer $T_{on,add}$ des Zusatzintervalls bestimmt werden, um das die $T_{on}$-Zeit verlängert wird. Dazu kann diese Zeitdauer zu einem Wert $T_{on,0}$ addiert werden, der von einem Regler in der Steuereinrichtung 14 abhängig von der Ausgangskreisgröße ermittelt wird. Die $T_{on}$-Zeit kann bestimmt werden als

$$T_{on} = T_{on,0} + T_{on,add} \; .  \qquad\qquad (1)$$

In der so bestimmten $T_{on}$-Zeit hängt der Term $T_{on,add}$ vom Vorzeichen der Zeitableitung der Eingangsspannung ab.

Bei Schritt 54 kann der Schalter 24 für eine Zeit in den Ein-Zustand geschaltet werden, die gemäß Gleichung (1) bei Schritt 53 ermittelt wurde. Die Steuerung des Schalters 24 hängt vom Vorzeichen der Zeitableitung der Eingangsspannung ab.

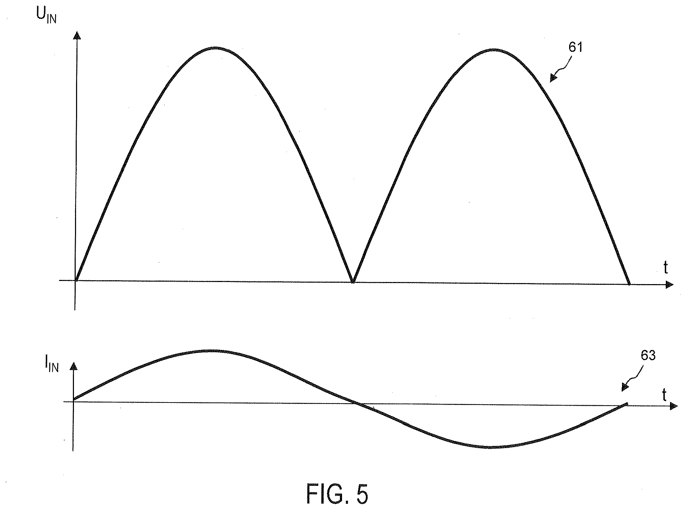

FIG. 5 illustriert schematisch die Wirkungsweise einer Leistungsfaktorkorrekturschaltung nach einem Ausführungsbeispiel. Der Leistungsfaktorkorrekturschaltung wird eine Eingangsspannung 61 zugeführt, die eine gleichgerichtete Wechselspannung sein kann.

Ein Parameterwert, der die $T_{on}$-Zeit bestimmt, für die der Schalter 24 in den Ein-Zustand geschaltet wird, um Energie in der Induktivität 21 zu speichern, wird unter Berücksichtigung des Vorzeichens der Zeitableitung der Eingangsspannung 61 ermittelt. Beispielsweise kann die Zeitdauer $T_{on,add}$ eines Zusatzintervalls, um das die $T_{on}$-Zeit verlängert werden soll, abhängig vom Wert der Eingangsspannung und vom Vorzeichen der Zeitableitung der Eingangsspannung bestimmt werden. Durch Berücksichtigung, ob die Eingangsspannung zu- oder abnimmt, können unterschiedliche Werte für die Zeitdauer $T_{on,add}$ des Zusatzintervalls bestimmt werden, um das die $T_{on}$-Zeit verlängert wird, auch wenn der Wert der Eingangsspannung dabei jeweils gleich ist.

Der von der Leistungsfaktorkorrekturschaltung aufgenommene Eingangsstrom 63 kann weiter geglättet werden, wenn die Zeitdauer $T_{on,add}$ des Zusatzintervalls, um das die $T_{on}$-Zeit verlängert wird, abhängig von sowohl dem Wert der Eingangsspannung als auch dem Vorzeichen der Zeitableitung der Eingangsspannung bestimmt wird. Insbesondere kann eine Amplitude eines Strompeaks, der beim Wiederanstieg der Eingangsspannung auftreten kann, verringert werden.

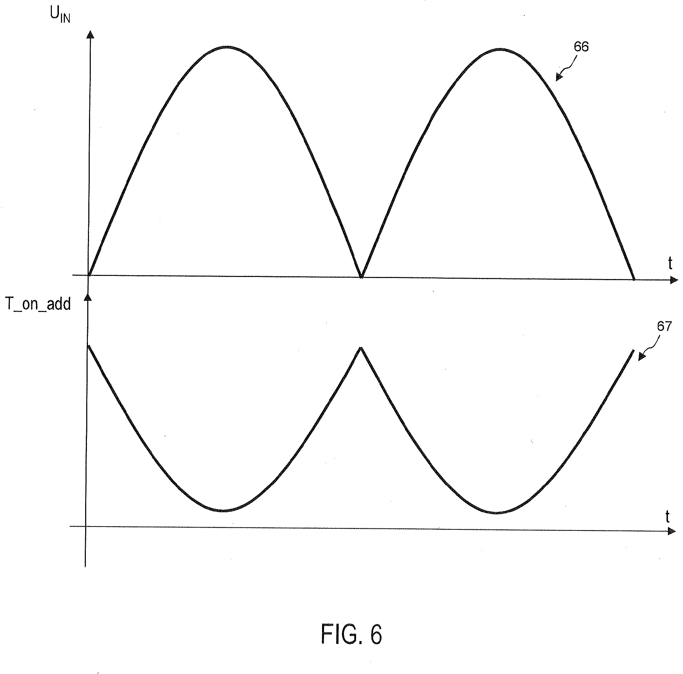

FIG. 6 illustriert im Vergleich dazu die Wirkungsweise einer Leistungsfaktorkorrekturschaltung, bei der die $T_{on}$-Zeit nicht abhängig vom Vorzeichen der Zeitableitung der Eingangsspannung ist. Der Leistungsfaktorkorrekturschaltung wird eine Eingangsspannung 66 zugeführt, die eine gleichgerichtete Wechselspannung sein kann. Eine Zeitdauer $T_{on,add}$ eines Zusatzintervalls, um das die $T_{on}$-Zeit verlängert wird, wird abhängig vom Wert der Eingangsspannung, aber unabhängig vom Vorzeichen der Zeitableitung der Eingangsspannung bestimmt, wie durch die Kurve 67 dargestellt. Der von der Leistungsfaktorkorrekturschaltung aufgenommene Eingangsstrom kann in diesem Fall einen Strompeak aufweisen, womit im Vergleich zu dem in FIG. 5 dargestellten Fall, bei dem die Zeitdauer $T_{on,add}$ des Zusatzintervalls auch vom Vorzeichen der Zeitableitung der Eingangsspannung abhängt, ein Eingangsstrom aufgenommen wird, der nicht mehr durchgängig dem Sinusverlauf folgt, sondern Spitzen oder konstant beleibende Abschnitte aufweisen kann.

Durch Anpassung der Steuerung des Schalters, beispielsweise durch Änderung der Zeitdauer $T_{on,add}$ des Zusatzintervalls, um das die $T_{on}$-Zeit gemäß Gleichung (1) verlängert wird, abhängig vom Vorzeichen der Zeitableitung der Eingangsspannung kann die Amplitude eines Strompeaks verringert werden, der im von der Leistungsfaktorkorrekturschaltung aufgenommenen Eingangsstrom bei einem Wiederanstieg der Eingangsspannung auftreten kann. Der Strompeak muss allerdings nicht notwendig vollständig eliminiert werden.

Durch Anpassen der Ansteuerung des Schalters 24 abhängig vom Vorzeichen der Zeitableitung der Eingangsspannung kann eine Amplitude des Strompeaks im Eingangsstrom erreicht werden, die kleiner ist als die Amplitude des Strompeaks bei einer Ansteuerung des Schalters 24 ohne Berücksichtigung des Vorzeichens der Zeitableitung der Eingangsspannung. Der Strompeak im von der Leistungsfaktorkorrekturschaltung aufgenommenen Strom kann so reduziert werden. Entsprechend können einzelne oder mehrere Harmonische im Vergleich zur gesamten harmonischen Verzerrung verringert werden.

Ein Anpassen der Ansteuerung des Schalters 24 abhängig vom Vorzeichen der Zeitableitung der Eingangsspannung kann auf unterschiedliche Weise geschehen. Beispielsweise können abhängig davon, ob die Eingangsspannung gerade zunimmt oder abnimmt, Parameterwerte, die das Ansteuern des Schalters 24 beeinflussen, aus einer von mehreren Tabellen ausgewählt werden.

Das Vorzeichen der Zeitableitung der Eingangsspannung kann durch eine entsprechende Schaltung ermittelt und an die Steuereinrichtung 14 bereitgestellt werden. Alternativ oder zusätzlich kann die Steuereinrichtung 14 auch so eingerichtet sein, dass sie das Vorzeichen der Zeitableitung der Eingangsspannung rechnerisch ermittelt. Dazu kann beispielsweise bestimmt werden, ob ein Quotient aus $T_{on}$-Zeit und $T_{off}$-Zeit zunimmt oder abnimmt. Beispielsweise kann abhängig vom Vorzeichen

$$V_z = \mathrm{sign} \left( \frac{d}{dt} \left( \frac{T_{off}(t)}{T_{on}(t)} \right) \right), \qquad\qquad (2)$$

das angibt, ob der Quotient aus $T_{off}$-Zeit und $T_{on}$-Zeit zunimmt oder abnimmt, bestimmt werden, ob die Eingangsspannung gerade zunimmt oder abnimmt. Eine Auswertung von Gleichung (2) kann beispielsweise basierend auf dem von einem Regler der Steuereinrichtung abhängig von der Ausgangsspannung $U_{OUT}$ bestimmten Wert von $T_{on,0}$ erfolgen. Die Zeitableitung in Gleichung (2) muss auch nicht explizit berechnet werden. Informationen darüber, ob die Eingangsspannung zunimmt oder abnimmt, kann daraus erhalten werden, ob der Quotient $T_{off}(t)/T_{on}(t)$ zunimmt oder abnimmt. Dazu kann der Quotient zu unterschiedlichen, diskreten Zeiten von der Steuereinrichtung 14 ausgewertet werden, um zu ermitteln, ob der Quotient $T_{off}(t)/T_{on,0}(t)$ zunimmt oder abnimmt.

Informationen über das Vorzeichen der Zeitableitung der Eingangsspannung können verwendet werden, um eine von mehreren Tabellen auszuwählen, die zur Bestimmung der $T_{on}$-Zeit verwendet wird. Beispielsweise kann abhängig davon, ob das nach Gleichung (2) ermittelte Vorzeichen positiv oder negativ ist, ein Wert für die Zeitdauer $T_{on,add}$ des Zusatzintervalls, um das die $T_{on}$-Zeit gemäß Gleichung (1) verlängert wird, basierend auf einer ersten Tabelle oder einer zweiten Tabelle bestimmt werden. Alternativ oder zusätzlich kann abhängig davon, ob das nach Gleichung (2) ermittelte Vorzeichen positiv oder negativ ist, zwischen unterschiedlichen Formeln gewählt werden, die zur rechnerischen Bestimmung eines Parameterwerts, beispielsweise der Zeitdauer $T_{on,add}$, verwendet werden. Es kann überwacht werden, ob die nach Gleichung (2) ermittelte Größe einen Wechsel von +1 nach -1 oder umgekehrt aufweist. Bei einem Vorzeichenwechsel kann ein Wechsel zwischen unterschiedlichen Tabellen erfolgen, die die Steuereinrichtung 14 zur Steuerung des Schalters 24 verwendet.

Die Steuereinrichtung 14 kann beispielsweise als integrierte Halbleiterschaltung ausgestaltet sein. Die Steuereinrichtung 14 kann als ASIC ausgestaltet sein.

Die Steuereinrichtung 14 kann einen Regler umfassen, der abhängig von einer Ausgangskreisgröße, beispielsweise abhängig von der der Ausgangsspannung $U_{OUT}$ der Leistungsfaktorkorrekturschaltung, den Wert $T_{on,0}$ für die $T_{on}$-Zeit berechnet. Der Regler kann auch die $T_{off}$-Zeit bestimmen. Die $T_{off}$-Zeit kann auch anderweitig bestimmt werden, beispielsweise durch Überwachung eines Nulldurchgangs des Stroms durch die Induktivität 21.

Die Steuereinrichtung 14 kann weiterhin einen Speicher umfassen. In dem Speicher können mehrere Tabellen abgelegt sein. Jede der Tabellen kann Werte für die Zeitdauer $T_{on,add}$ eines Zusatzintervalls, um das die $T_{on}$-Zeit verlängert wird, als Funktion des Werts der Eingangsspannung beinhalten. Eine erste Tabelle ist einem ersten Vorzeichen der Zeitableitung der Eingangsspannung zugeordnet. Eine zweite Tabelle ist einem zweiten Vorzeichen der Zeitableitung der Eingangsspannung zugeordnet.

Die Steuereinrichtung 14 kann auch eine Logik umfassen. Die Logik kann abhängig vom Vorzeichen der Zeitableitung der Eingangsspannung entweder die erste Tabelle oder die zweite Tabelle auswählen. Basierend auf der ausgewählten Tabelle kann durch eine Tabellenabfrage unter Verwendung des aktuellen Werts der Eingangsspannung der Leistungsfaktorkorrekturschaltung ein Parameterwert ausgelesen werden. Die Steuerung des Schalters 24 kann abhängig von dem entsprechenden Parameterwert erfolgen. Der Parameterwert kann die Zeitdauer $T_{on,add}$ des Zusatzintervalls sein, um das die $T_{on}$-Zeit verlängert wird. Die Logik kann abhängig von dem von dem Regler bestimmten Wert $T_{on,0}$ für die $T_{on}$-Zeit und dem aus der ausgewählten Tabelle abgefragten Wert für die Zeitdauer $T_{on,add}$ des Zusatzintervalls, um das die $T_{on}$-Zeit verlängert wird, gemäß Gleichung (1) die $T_{on}$-Zeit bestimmen. Ein Steuersignal der Steuereinrichtung 14, das den Schalter 24 für die so bestimmte $T_{on}$-Zeit in den Ein-Zustand schaltet, kann über einen Ausgang der Steuereinrichtung 14 ausgesteuert werden.

Die Logik kann das Vorzeichen der Zeitableitung der Eingangsspannung der Leistungsfaktorkorrekturschaltung rechnerisch bestimmen. Beispielsweise kann die Logik das Vorzeichen der Zeitableitung abhängig von der vom Regler bestimmen Zeitdauer $T_{on,0}$ bestimmen. Die Logik kann das Vorzeichen der Zeitableitung der Eingangsspannung beispielsweise gemäß Gleichung (2) bestimmen, wobei der vom Regler ermittelte Wert $T_{on,0}$ als Wert im Nenner des Quotienten auf der rechten Seite von Gleichung (2) verwendet werden kann. Die Logik und/oder der Regler kann auch den aktuellen Wert der Eingangsspannung rechnerisch bestimmen, beispielsweise aus der erfassten Ausgangsspannung $U_{OUT}$. Alternativ oder zusätzlich kann die Steuereinrichtung 14 einen weiteren Eingang aufweisen, um die Eingangsspannung $U_{IN}$ zu erfassen, wie in FIG. 2 dargestellt. In diesem Fall können der aktuelle Wert der Eingangsspannung und/oder das Vorzeichen ihrer Zeitableitung abhängig von dem am weiteren Eingang empfangenen Signal bestimmt werden.

Bei den Leistungsfaktorkorrekturschaltungen und Verfahren nach Ausführungsbeispielen können die Tabellen, aus denen abhängig vom Vorzeichen der Zeitableitung der Eingangsspannung der Leistungsfaktorkorrekturschaltung ein Parameterwert ausgelesen wird, variabel sein. Die Tabellen können beispielsweise abhängig davon, welche Last mit Energie versorgt wird, unterschiedlich sein. Die Steuereinrichtung 14 kann so ausgestaltet sein, dass die Tabellen im Speicher auf einfache Weise konfigurierbar sind. Beispielsweise kann die Steuereinrichtung 14 programmierbar sein, so dass unterschiedliche Tabellen in dem Speicher gespeichert werden können.

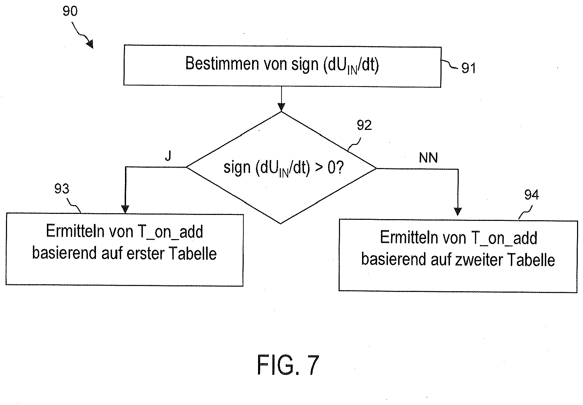

FIG. 7 ist ein Flussdiagramm eines Verfahrens 90, das von der Steuereinrichtung 14 ausgeführt werden kann. Das Verfahren kann verwendet werden, um abhängig davon, ob die Eingangsspannung gerade zunimmt oder abnimmt, eine unterschiedliche Ansteuerung des Schalters 24 zu realisieren.

Bei Schritt 91 wird das Vorzeichen der Zeitableitung der Eingangsspannung bestimmt. Das Vorzeichen der Zeitableitung der Eingangsspannung kann beispielsweise durch Überwachung der Eingangsspannung oder rechnerisch aus Ausgangskreisgrößen bestimmt werden.

Bei Schritt 92 wird ermittelt, ob das Vorzeichen der Zeitableitung der Eingangsspannung positiv ist. Falls das Vorzeichen positiv ist, wird bei Schritt 93 ein Parameterwert zum Ansteuern des Schalters 24 basierend auf einer ersten Tabelle ermittelt. Beispielsweise kann die Zeitdauer $T_{on,add}$ des Zusatzintervalls, um das die $T_{on}$-Zeit verlängert wird, basierend auf der ersten Tabelle ermittelt. Falls das Vorzeichen negativ ist, wird bei Schritt 94 der Parameterwert zum Ansteuern des Schalters 24 basierend auf einer zweiten Tabelle ermittelt werden. Beispielsweise kann die Zeitdauer $T_{on,add}$ des Zusatzintervalls, um das die $T_{on}$-Zeit verlängert wird, basierend auf der zweiten Tabelle ermittelt. Der abhängig vom Vorzeichen der Zeitableitung der Eingangsspannung ermittelte Parameterwert kann zu einer entsprechenden Ansteuerung des Schalters 24 verwendet werden. Dabei kann die $T_{on}$-Zeit gemäß Gleichung (1) bestimmt werden.

Während Ausführungsbeispiele unter Bezugnahme auf die Figuren beschrieben wurden, können Abwandlungen bei weiteren Ausführungsbeispielen realisiert werden. Beispielsweise können die Funktionen der Steuereinrichtung 14 auch von mehreren separaten Schaltungen ausgeführt werden.

Während Ausführungsbeispiele beschrieben wurden, bei denen die Zeitdauer $T_{on,add}$ des Zusatzintervalls, um das die $T_{on}$-Zeit verlängert wird, abhängig vom Vorzeichen der Zeitableitung der Eingangsspannung bestimmt wird, können auch andere Größen abhängig vom Vorzeichen der Zeitableitung der Eingangsspannung bestimmt werden, die die Stromaufnahme der Leistungsfaktorkorrekturschaltung beeinflussen.

Während Ausführungsbeispiele beschrieben wurden, bei denen abhängig vom Vorzeichen der Zeitableitung der Eingangsspannung eine von mehreren Tabellen ausgewählt wird, aus der ein Parameterwert abgefragt wird, kann eine vom Vorzeichen der Zeitableitung abhängige Ansteuerung auch auf andere Weise realisiert werden. Beispielsweise müssen Parameterwerte nicht kennfeldbasiert hinterlegt sein. Es kann beispielsweise abhängig vom Vorzeichen der Zeitableitung der Eingangsspannung eine von mehreren Formeln ausgewählt werden, die zur Bestimmung der Zeitdauer $T_{on,add}$ des Zusatzintervalls, um das die $T_{on}$-Zeit verlängert wird, und/oder zur Bestimmung eines anderen Parameterwerts für die Ansteuerung des Schalters 24 verwendet werden können.

Zusätzlich oder alternativ ist es auch möglich, den Parameterwert abhängig von der Steilheit der Änderung der Eingangsspannung $U_{IN}$, also vom Anstieg der Zeitableitung der Eingangsspannung $U_{IN}$ zu ermitteln.

Verfahren und Vorrichtungen nach Ausführungsbeispielen können bei Betriebsgeräten für Leuchtmittel, beispielsweise bei einem elektronischen Vorschaltgerät oder bei einem LED-Konverter, verwendet werden.

## Patentansprüche

1. Leistungsfaktorkorrekturschaltung, umfassend:

    einen Eingang zum Empfangen einer Eingangsspannung ($U_{IN}$),
    eine mit dem Eingang gekoppelte Induktivität (21),
    ein mit der Induktivität (21) gekoppeltes Schaltmittel (24), das steuerbar ist, um die Induktivität (21) wahlweise zu laden und zu entladen,
    eine Steuereinrichtung (14), die eingerichtet ist, um ein Steuersignal (Ctrl) zum Steuern des Schaltmittels (24) abhängig von einem Parameterwert zu erzeugen,
    **dadurch gekennzeichnet,**
    **dass** die Steuereinrichtung (14) eingerichtet ist, um den Parameterwert abhängig von einem Vorzeichen einer Zeitableitung der Eingangsspannung ($U_{IN}$) zu ermitteln.

2. Leistungsfaktorkorrekturschaltung nach Anspruch 1,
    wobei die Steuereinrichtung (14) eingerichtet ist, um den Parameterwert abhängig von einem aktuellen Wert der Eingangsspannung ($U_{IN}$) und dem Vorzeichen der Zeitableitung zu ermitteln.

3. Leistungsfaktorkorrekturschaltung nach Anspruch 2,
    wobei die Steuereinrichtung (14) eingerichtet ist, um bei demselben aktuellen Wert der Eingangsspannung ($U_{IN}$)

    - einen ersten Parameterwert zu ermitteln, wenn die Zeitableitung ein positives Vorzeichen aufweist, und
    - einen davon verschiedenen zweiten Parameterwert zu ermitteln, wenn die Zeitableitung ein negatives Vorzeichen aufweist.

4. Leistungsfaktorkorrekturschaltung nach Anspruch 3,
    wobei die Steuereinrichtung (14) derart eingerichtet ist, dass der erste Parameterwert kleiner als der zweite Parameterwert ist.

**5.** Leistungsfaktorkorrekturschaltung nach einem der vorhergehenden Ansprüche,
wobei die Steuereinrichtung (14) eingerichtet ist, um den Parameterwert basierend auf einer ersten Tabelle zu ermitteln, wenn die Zeitableitung ein erstes Vorzeichen aufweist, und um den Parameterwert basierend auf einer davon verschiedenen zweiten Tabelle zu ermitteln, wenn die Zeitableitung ein zu dem ersten Vorzeichen entgegengesetztes zweites Vorzeichen aufweist.

**6.** Leistungsfaktorkorrekturschaltung nach einem der vorhergehenden Ansprüche,
wobei die Steuereinrichtung (14) eingerichtet ist, um das Schaltmittel (24) für eine $T_{on}$-Zeit (42, 43) in einen Ein-Zustand zu schalten, und
wobei die $T_{on}$-Zeit (42, 43) von dem Parameterwert abhängt.

**7.** Leistungsfaktorkorrekturschaltung nach Anspruch 6,
wobei die Steuereinrichtung (14) eingerichtet ist, um die $T_{on}$-Zeit um ein von der Eingangsspannung ($U_{IN}$) abhängiges Zusatzintervall zu verlängern, wobei der Parameterwert eine Dauer des Zusatzintervalls definiert.

**8.** Leistungsfaktorkorrekturschaltung nach Anspruch 6 oder Anspruch 7, wobei die Steuereinrichtung (14) eingerichtet ist, um das Vorzeichen der Zeitableitung rechnerisch zu bestimmen.

**9.** Leistungsfaktorkorrekturschaltung nach Anspruch 8,
wobei die Steuereinrichtung (14) eingerichtet ist, um das Vorzeichen der Zeitableitung basierend auf einem Quotienten aus einer $T_{off}$-Zeit, für die das Schaltmittel (24) jeweils in einen Aus-Zustand geschalten ist, und der $T_{on}$-Zeit rechnerisch zu bestimmen.

**10.** Leistungsfaktorkorrekturschaltung nach einem der vorhergehenden Ansprüche,
wobei die Steuereinrichtung (14) eingerichtet ist, um den Parameterwert abhängig von einer Ausgangskreisgröße der Leistungsfaktorkorrekturschaltung rechnerisch zu ermitteln.

**11.** Betriebsgerät für ein Leuchtmittel, umfassend
eine Leistungsfaktorkorrekturschaltung (11) nach einem der vorhergehenden Ansprüche.

**12.** Verfahren zum Steuern einer Leistungsfaktorkorrekturschaltung (11), die einen Eingang zum Empfangen einer Eingangsspannung ($U_{IN}$), eine mit dem Eingang gekoppelte Induktivität (21) und ein mit der Induktivität (21) gekoppeltes Schaltmittel (24), das steuerbar ist, um die Induktivität (21) wahlweise zu laden und zu entladen, umfasst,
wobei ein Steuersignal (Ctrl) zum Schalten des Schaltmittels (24) abhängig von einem Parameterwert erzeugt wird,
**dadurch gekennzeichnet,**
**dass** der Parameterwert abhängig von einem Vorzeichen einer Zeitableitung der Eingangsspannung ($U_{IN}$) ermittelt wird.

**13.** Verfahren nach Anspruch 12,
wobei der Parameterwert abhängig von sowohl dem Vorzeichen der Zeitableitung als auch einem aktuellen Wert der Eingangsspannung ($U_{IN}$) ermittelt wird.

**14.** Verfahren nach Anspruch 12 oder Anspruch 13,
wobei der Parameterwert durch Abfrage einer ersten Tabelle ermittelt wird, wenn die Zeitableitung ein erstes Vorzeichen aufweist, und durch Abfrage einer davon verschiedenen zweiten Tabelle ermittelt wird, wenn die Zeitableitung ein zu dem ersten Vorzeichen entgegengesetztes zweites Vorzeichen aufweist.

**15.** Verfahren nach einem der Ansprüche 12-14,
wobei eine $T_{on}$-Zeit (42, 43), für die das Schaltmittel (24) in einen Ein-Zustand geschaltet wird, von dem Parameterwert abhängt.

**16.** Verfahren nach einem der Ansprüche 12-15,
wobei das Verfahren mit einer Leistungsfaktorkorrekturschaltung (11) nach einem der Ansprüche 1-10 durchgeführt wird.

**Claims**

1. Power factor correction circuit comprising:

    - an input for receiving an input voltage ($U_{IN}$), an inductance (21) coupled to the input,
    - switching means (24) coupled to the inductor (21), which are controllable to selectively charge and discharge the inductance (21)
    - control means (14) arranged to generate a control signal (Ctrl) for controlling the switching means (24) in response to a parameter value,

    **characterized in that**
    the control device (14) is configured to determine the parameter value as a function of a sign of a time derivative of the input voltage ($U_{IN}$).

2. Power factor correction circuit according to claim 1,
    **characterized in that**
    the control device (14) is configured to determine the parameter value as a function of a current value of the input voltage ($U_{IN}$) and the sign of the time derivative.

3. Power factor correction circuit according to claim 2,
    **characterized in that**
    the control device (14) is adapted to operate at the same current value of the input voltage ($U_{IN}$)

    - to determine a first parameter value if the time derivative has a positive sign, and
    - to determine a second parameter value different therefrom if the time derivative has a negative sign.

4. Power factor correction circuit according to claim 3,
    **characterized in that**
    the control device (14) is configured so that the first parameter value is smaller than the second parameter value.

5. Power factor correction circuit according to one of the preceding claims,
    **characterized in that**
    the control device (14) is configured to determine the parameter value based on a first table when the time derivative has a first sign and to determine the parameter value based on a different second table when the time derivative has a second sign which is opposite to the first sign.

6. Power factor correction circuit according to one of the preceding claims,
    **characterized in that**
    the control means (14) is arranged to switch the switching means (24) for a $T_{ON}$ time (42, 43) in an on state, and wherein the $T_{ON}$ time (42, 43) depends on the parameter value.

7. Power factor correction circuit according to claim 6,
    **characterized in that**
    the control device (14) is configured to extend the $T_{ON}$ time by an additional interval dependent on the input voltage ($U_{IN}$), wherein the parameter value defines a duration of the additional interval.

8. Power factor correction circuit according to claim 7,
    **characterized in that**
    the control device (14) is configured to determine the mathematical sign of the time derivative.

9. Power factor correction circuit according to claim 8,
    **characterized in that**
    the control device (14) is configured to determine the sign of the time derivative based on a quotient of a $T_{OFF}$ time for which the switching means are switched into an off state and the $T_{ON}$ time is to be determined by calculation.

10. Power factor correction circuit according to one of the preceding claims,
    **characterized in that**
    the control device (14) is configured to calculate the parameter value as a function of an output circuit variable of the power factor correction circuit.

11. Operating device for a luminaire, comprising a power factor correction circuit (11) according to one of the preceding claims.

12. Method for controlling a power factor correction circuit (11) having an input to receive an input voltage ($U_{IN}$), an inductance (21) coupled to the input, and a switching means (24) which are coupled to the inductance (21) and is controllable in order to selectively charge and discharge the inductance (21)
wherein a control signal (Ctrl) for switching the switching means (24) is generated as a function of a parameter value,
**characterized in that**
the parameter value is determined as a function of a sign of a time derivative of the input voltage ($U_{IN}$).

13. Method according to claim 12, wherein the parameter value is determined as a function of both the sign of the time derivative and a current value of the input voltage ($U_{IN}$).

14. Method according to claim 12 or claim 13, wherein the parameter value is determined by querying a first table when the time derivative has a first sign, and is determined by querying a second table which is different therefrom when the time derivative has a second value which is opposite to the first sign.

15. Method according to one of the claims 12-14, wherein a $T_{ON}$ time (42, 43) for which the switching means (24) is switched into an on-state depends on the parameter value.

16. Method according to one of the claims 12-15, wherein the method is carried out with a power factor correction circuit (11) as claimed in one of claims 1 to 10.


**Revendications**

1. Circuit de correction de facteur de puissance comprenant :

   une entrée pour la réception d'une tension d'entrée ($U_{IN}$),
   une inductance (21) couplée avec l'entrée,
   un moyen de commutation (24) couplé avec l'inductance (21), qui est contrôlable afin de charger et de décharger l'inductance (21) de manière sélective,
   un dispositif de commande (14) qui est conçu pour générer un signal de commande (Ctrl) pour la commande du moyen de commutation (24) en fonction de la valeur d'un paramètre,
   **caractérisé en ce que**
   le dispositif de commande (14) est conçu pour déterminer la valeur du paramètre en fonction d'un signe d'une dérivée en fonction du temps de la tension d'entrée ($U_{IN}$).

2. Circuit de correction de facteur de puissance selon la revendication 1,
   le dispositif de commande (14) étant conçu pour déterminer la valeur du paramètre en fonction d'une valeur actuelle de la tension d'entrée ($U_{IN}$) et du signe de la dérivée en fonction du temps.

3. Circuit de correction de facteur de puissance selon la revendication 2,
   le dispositif de commande (14) étant conçu, pour la même valeur actuelle de la tension d'entrée ($U_{IN}$), pour :

   - déterminer une première valeur de paramètre lorsque la dérivée en fonction du temps présente un signe positif et
   - déterminer une deuxième valeur de paramètre, différente de la première, lorsque la dérivée en fonction du temps présente un signe négatif.

4. Circuit de correction de facteur de puissance selon la revendication 3,
   le dispositif de commande (14) étant conçu de façon à ce que la première valeur de paramètre soit inférieure à la deuxième valeur de paramètre.

5. Circuit de correction de facteur de puissance selon l'une des revendications précédentes,
   le dispositif de commande (14) étant conçu pour déterminer la valeur de paramètre sur la base d'un premier tableau, lorsque la dérivée en fonction du temps présente un premier signe et pour déterminer la valeur de paramètre sur la base d'un deuxième tableau, différent du premier, lorsque la dérivée en fonction du temps présente un deuxième signe opposé au premier signe.

**6.** Circuit de correction de facteur de puissance selon l'une des revendications précédentes, le dispositif de commande (14) étant conçu pour commuter le moyen de commutation (24) pour un temps $T_{on}$ (42, 43) dans un état activé et le temps $T_{on}$ (42, 43) dépendant de la valeur de paramètre.

**7.** Circuit de correction de facteur de puissance selon la revendication 6, le dispositif de commande (14) étant conçu pour prolonger le temps $T_{on}$ d'un intervalle supplémentaire dépendant de la tension d'entrée ($U_{IN}$), la valeur du paramètre définissant une durée de l'intervalle supplémentaire.

**8.** Circuit de correction de facteur de puissance selon la revendication 6 ou la revendication 7, le dispositif de commande (14) étant conçu pour déterminer le signe de la dérivée en fonction du temps par calcul.

**9.** Circuit de correction de facteur de puissance selon la revendication 8, le dispositif de commande (14) étant conçu pour déterminer par calcul le signe de la dérivée en fonction du temps sur la base d'un quotient entre un temps $T_{off}$, pendant lequel le moyen de commutation (24) est commuté dans un état désactivé, et le temps $T_{on}$.

**10.** Circuit de correction de facteur de puissance selon l'une des revendications précédentes, le dispositif de commande (14) étant conçu pour déterminer par calcul la valeur du paramètre en fonction de la taille d'un circuit de sortie du circuit de correction de facteur de puissance.

**11.** Appareil d'exploitation pour un moyen d'éclairage, comprenant un circuit de correction de facteur de puissance (11) selon l'une des revendications précédentes.

**12.** Procédé de commande d'un circuit de correction de facteur de puissance (11) qui comprend une entrée pour la réception d'une tension d'entrée ($U_{IN}$), une inductance (21) couplée avec l'entrée, un moyen de commutation (24) couplé avec l'inductance (21), qui est contrôlable afin de charger et de décharger l'inductance (21) de manière sélective, un signal de commande (Ctrl) étant généré pour la commutation du moyen de commutation (24) en fonction d'une valeur de paramètre, **caractérisé en ce que** la valeur du paramètre est déterminée en fonction d'un signe d'une dérivée en fonction du temps de la tension d'entrée ($U_{IN}$).

**13.** Procédé selon la revendication 12, la valeur du paramètre étant déterminée en fonction aussi bien du signe de la dérivée en fonction du temps que d'une valeur actuelle de la tension d'entrée ($U_{IN}$).

**14.** Procédé selon la revendication 12 ou la revendication 13, la valeur du paramètre étant déterminée par la consultation d'un premier tableau, lorsque la dérivée en fonction du temps présente un premier signe et par la consultation d'un deuxième tableau, différent du premier, lorsque la dérivée en fonction du temps présente un deuxième signe opposé au premier signe.

**15.** Procédé selon l'une des revendications 12 à 14, un temps $T_{on}$ (42, 43), pendant lequel le moyen de commutation (24) est commuté dans un état activé, dépendant de la valeur du paramètre.

**16.** Procédé selon l'une des revendications 12 à 15, le procédé étant exécuté avec un circuit de correction de facteur de puissance (11) selon l'une des revendications 1 à 10.

EP 2 859 652 B1

FIG. 1

14

FIG. 2

Ctrl

42                          43                          41

EIN

AUS                                              t

dU$_{IN}$/dt                                    44

t

FIG. 3

50

Bestimmen von sign (d U$_{IN}$/dt)          51

Bestimmen von T_on_add                       52

Bestimmen von T_on = T_on0 + T_on_add        53

Schalten des Schaltmittels in den Ein-
Zustand für T_on                             54

FIG. 4

FIG. 5

FIG. 6

90

Bestimmen von sign (dU$_{IN}$/dt) — 91

92

J       sign (dU$_{IN}$/dt) > 0?       NN

93                                                      94

Ermitteln von T_on_add
basierend auf erster Tabelle

Ermitteln von T_on_add
basierend auf zweiter Tabelle

FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1363385 A1
- EP 1526622 A1